# EUROPEAN PATENT SPECIFICATION

(11) **EP 0 707 676 B1**
(45) Date of publication and mention of the grant of the patent: **13.01.1999**
(21) Application number: 94917761.2
(22) Date of filing: 08.06.1994
(51) Int. Cl.: E02B 15/04

(54) **A FLOATING MODULAR SYSTEM TO SUPPORT OIL ABSORBENT BOOMS THAT PROVIDE CONTINUOUS PROTECTION FOR ENCLOSED OR SEMI-ENCLOSED WATER BODIES FROM FLOATING HYDROCARBONS**
MODULARES SCHWIMMSYSTEM ZUR UNTERSTÜTZUNG VON ABSORBIERENDEN ÖLSPERREN, WELCHES EINEN DAUERNDEN SCHUTZ GEGEN SCHWIMMENDE KOHLENWASSERSTOFFE IN GESCHLOSSENEN ODER HALBGESCHLOSSENEN GEWÄSSERN BIETET
SYSTEME MODULAIRE FLOTTANT DESTINE A PORTER DES BARRAGES ABSORBANTS FLOTTANTS ASSURANT LA PROTECTION EN CONTINU DES PLANS D'EAU FERMES OU SEMI-FERMES CONTRE LES HYDROCARBURES FLOTTANTS

(30) Priority: 10.06.1993 GR 93100247
(43) Date of publication of application: 24.04.1996
(73) Proprietor: Dounas, Constantinos, 710 03 Heraklion, Crete (GR); Lucet, Béatrice Yvette Michèle, 94370 Sucy-en-Brie (FR)
(72) Inventor: Dounas, Constantinos, 710 03 Heraklion, Crete (GR); Lucet, Béatrice Yvette Michèle, 94370 Sucy-en-Brie (FR)
(86) International application number: GR9400013
(87) International publication number: WO9429531

(56) References cited:
- DE-U- 8 505 925
- FR-A- 2 492 428
- FR-A- 2 675 828
- GB-A- 2 041 024
- US-A- 3 691 773

## Description

A floating modular system to support oil absorbent booms that provide continuous protection for enclosed or semi-enclosed water bodies from floating hydrocarbons. (see f.i. document DE-U-8505925).

The invention refers to an anchored stable modular system, consisting of floats having hydrodynamic shape to which are attached, by means of joints, floating oil absorbent booms. Tie-rods connect stably the floats to each other.

There are currently many different absorbent products made of polypropylene or other polymers on the market. These products can absorb on a selective basis petroleum hydrocarbons as well as a large number of chemical substances and therefore are commonly used to combat water pollution caused by toxic chemical waste. Some can even absorb many times their own weight in oil and can also remain floating on the surface of the water. This latter property, in combination with their reusability once the pollutant has been removed by mechanical means i.e. centrifuging, simple compression, makes them an effective oil pollution treatment in ports, lakes, rivers, marinas etc. and in enclosed or semi-enclosed water bodies in general. They are commonly used in the form of booms, i.e. cylindrical elongated sacs of netting which contain the absorbent material. Following an oil spill they are placed around the polluted spot in order to prevent the expansion of the spill and simultaneously absorb the oil from the water. Unfortunately, the use of such booms is resorted to in cases of emergency only and they are rarely used on a continuous basis. The main disadvantage against their continuous use is the hazard that they might present for navigation, especially in areas of heavy traffic, precisely where chronic oil pollution often occurs. The cumulative effect results in the severe degradation of various types of port installations and their environs. This often has direct unfavourable documented consequences on human health and on the general environment from the functional, aesthetical and ecological points of view.

The invention aims to allow the continuous use of absorbent booms and simultaneously to allow the undisturbed passage of vessels. It aims also by means of their attachment to floats having hydrodynamic shape to align them in such a way as to present the maximum surface area for the absorption of oil from the environment. At the same time the permanent anchorage of such a floating system will allow the permanent establishment of the absorbent booms in preselected positions. This anchorage, connected to the central float of the system, allows only limited movement of the structure to the extent that vessels may safely pass or manoeuvre close to the point where the system is established In the case of saturation of the absorbent booms by oil, they may be replaced immediately with new ones without the removal of the whole system from the position where it is anchored.

In order for the reader to gain a complete understanding of the present invention, examples of two preferred embodiments follow, with reference to the accompanying figures:

Figure 1 is a schematic sectional view of the floating system with both the two distal and the central floats having hydrodynamic shape.

Figure 2 is an enlarged elevated side view of one distal float of the first embodiment of the invention, illustrating the positions of its appendages.

In Figure 3 another type of hydrodynamic float in two pieces is presente.

Figure 4 is a bird's-eye view of the first embodiment of the invention.

Figure 5 is a bird's-eye view of the second embodiment.

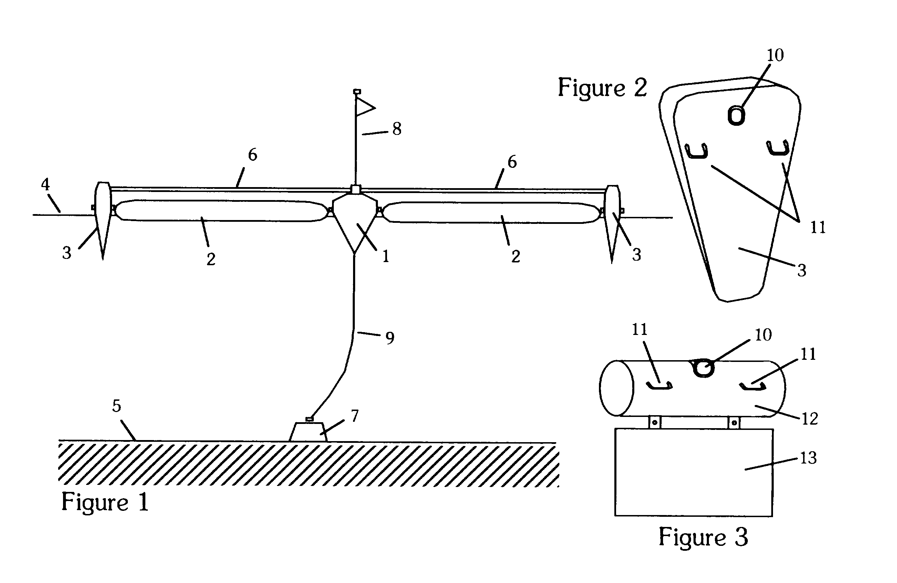

In relation to Figure 1 we can see a floating system with two arms, having a central (1), and two distal floats hydrodynamic in shape (3), the tie-rods for the stable connection of the floats to each other (6), and the absorbent booms (2) attached to the floats. The system floats on the surface of the water (4) and is anchored on the bottom (5) with a weight (7) connected by a rope or a chain (9) to the lower part of central float. This central float can support, on the upper part, a pole with a flag and a navigation light (8). It should be noted that the combined structures (3) and (6) are referred together as an arm of the system hereafter.

As can be seen in Figure 2 the distal floats (3) bear clasps (10) for the stable attachment of the tie-rods. The other free part of the tie-rods is also stably connected to the central float which carries exactly the same type of clasps. All the floats of the system bear joints (11) for the attachment of two absorbent booms (2) in each arm of the system. The existence of the same appendages (10) and (11) on both sides of the floats potentially allows the adjustment of a new tie-rod to extend the system in one or both directions. The floats (3) have a hydrodynamic shape that allows the positioning of the whole floating system perpendicular to the direction of the surface current of the water.

In Figure 3 another type of hydrodynamic float is depicted. It consists of a main cylindrical float (12) that bears the same appendages (10, 11) and to which is attached a rectangle surface (13) that plays the part of ballast and at the same time gives hydrodynamic properties to the whole structure.

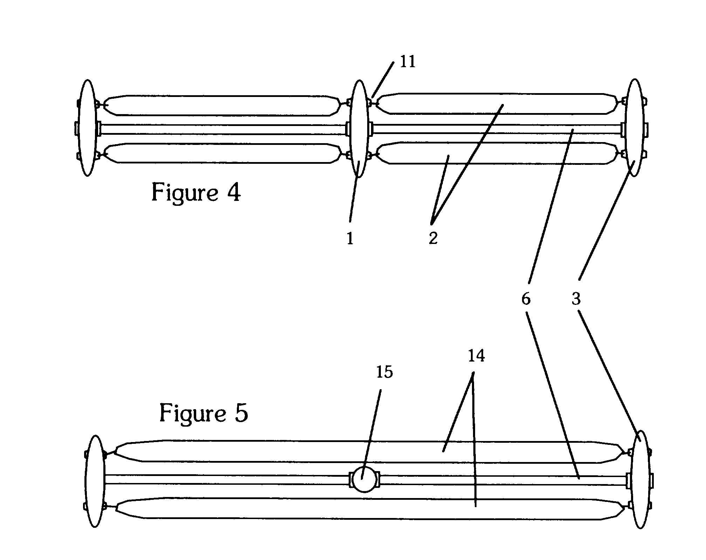

Figure 4 shows the two tie-rods (6) that are located in a straight line and are connected with the side of the distal floats (3) at an angle of 90°. It also shows the way in which the two absorbent booms (2) are connected by the joints (11) to the floats of each arm.

Figure 5 shows a floating system that is a variation of the first embodiment of the invention. The system here supports only two absorbent booms (14) and this is achieved through the attachment of the booms directly from the distal floats without the intervention of the central float. The latter may be different in shape from the distal floats and in this embodiment consists of a cylindrical float (15) that bears two clasps for the attachment of the tie-rods of the arms and is connected, by its lower part which is submerged in the water, with the rope or the chain of the anchorage system.

The invention may be applied in areas where wind exerts a shear stress on the water surface and thereby entails the generation of a surface drift current that causes the perpendicular positioning of the floating system and consequently of the oil absorbent booms attached to it against the direction of the current. This is due to the hydrodynamic shape of the distal floats. These special hydrodynamic properties of the system allow it to make of use water circulation and ultimately to play the part of a stationary vacuum cleaner which absorbs continuously oil from the surface of the water.

## Claims

1. A floating system for the support of floating oil absorbent booms (2) comprising a central (1) and two distal floats (3) that bear joints for the attachment of oil absorbent booms, said distal floats having hydrodynamic shape, located in diametrically opposed position in relation to the central float, having a parallel orientation in relation to each other and connected stably to the central float with tie-rods (6); said system is anchored by the central float (1) and has a tendency to maintain the attached floating booms (2) in a position perpendicular to the direction of the surface current of the water due to the hydrodynamic shape of the distal floats (3).

2. The floating system, as in claim 1, comprising distal floats (3) equipped with appendages (10,11) for the attachment of absorbent booms (2) and tie-rods (6) on both sides to allow the extension of the arms of the system in both directions.

3. The floating system, as in claim 1, comprising appendages (11) for the attachment of more than one absorbent boom on each arm.

4. A floating system, as in claim 1, wherein the central float (1) may be conical, spherical, cylindrical, or a combination of these.

5. A floating system, as in claims 1 and 4, wherein the absorbent booms can be attached between the two distal floats without the intervention of the central float.

## Patentansprüche

1. Ein schwimmkörpersystem, das als träger von schwebenden ölabsorbierenden teilen dient (2), und aus einem zentralen (1) und zwei entfenteren schwimmokörpen (3) besteht, an denen verbindungstücke zum haften von ölabsorbierenden materials angebracht sind; die entfernteren schwimmokörper haben eine hydrodynamische form und sind gegenüber dem zentralen schwimmkörper in diametral entgegengesetzter position angebracht; beide schwimmkörper liegen parallel zueinander und sind mit dem zentralen schwimmkörper durch plastikrohre festverbunden; das system ist durch den zentralen schwimmkörper verankert und weist die tendenz,auf die anhaftenden schwimmenden ölteilchen in einer position senkrecht zur oberfläche des fliebenden wassers zu halten, was auf die hydrodynamische form der entfernteren schwimmkörper zurückzuführen ist.

2. Das schwimmkörpersystem, wie in anforderung 1 bescchrieben, das entferntere schwimmkörper einschliebt (3), ist mit zubehör zum haften absorbierenden materials (2) und mit plastikrohren (6) an beiden seiten ausgestattet, um die erweiterung der arme des systems in beide richtungen zu ermöglichen.

3. Ein schwimmkörpersystem, wie in anforderung 1, das an jedem arm zubehör für mehr als eine absorbierende möglichkeit enthält.

4. Ein schwimmkörpersystem, wie in anforderung 1, in welchem der zentrale schwimmkörper konisch, sphärisch, zylindrisch, oder eine kombination aller drei formen sein kann.

5. Ein schwimmkörpersystem, wie in den anforderung 1 und 4 beschrieben, in welchen das absorbierende material zwischen den zwei entfernteren schwimmkörpern ohne mitwirkung des zentralen schwimmkörpers angebracht werden kann.

## Revendications

1. Un système flottant pour le support de barrages flottants absorbants d'hydrocarbures (2) comprenant un flotteur central (1) et deux flotteur distants (3) qui servent à attacher des barrages absorbants d'hydrocarbures, les dits flotteurs distants ont une forme hydrodynamique, sont positionnés de manière diamétralement opposée par rapport au flotteur central, ont une orientation parrallèle l'un par rapport à l'autre et et sont raccordés de manière stable au flotteur central à l'aide de barres (6), les dit système ancré par le flotteur central (1) a une tendance à maintenir les barrages flottants attachés dans une position perpenticulaire à la direction du courant d'eau de surface du fait de la forme hydrodynamique des flotteurs distants (3).

2. Le système flottant, comme dans revendication 1, comprend des flotteurs distants (3) équipés des accessoires (10, 11) pour l'accrochage des barrières absorbantes (2) et des barres (6) des côtés pour permettre l'extension des bras du système dans les deux directions.

3. Le système flottant, comme dans revendication 1, comprend des accessoires (11) pour l'accrochage de plus d'un barrage absorbent sur chaque bras.

4. Un système flottant, comme dans revendication 1, dans lequel le flotteur central (1) peut être conique, sphérique, cylindrique, ou une compinaison de ceux-ci.

5. Un système flottant, comme dans revendications 1 et 4, dans lequel les barrages absorbants peuvent être attachés entre les deux flotteurs distants sans l'intervention du flotteur central,
